(19) Europäisches Patentamt / European Patent Office / Office européen des brevets

(11) **EP 4 368 276 A1**

(12) **EUROPEAN PATENT APPLICATION**

(43) Date of publication:
**15.05.2024 Bulletin 2024/20**

(21) Application number: **23199904.6**

(22) Date of filing: **26.09.2023**

(51) International Patent Classification (IPC):
***B01D 53/22*** (2006.01)

(52) Cooperative Patent Classification (CPC):
**B01D 53/226;** B01D 2256/16; B01D 2311/13;
B01D 2317/022

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022 JP 2022177928**

(71) Applicant: **Hitachi, Ltd.
Tokyo 100-8280 (JP)**

(72) Inventors:
  • **ISHIDA, Naoyuki**
    **Tokyo (JP)**
  • **IIZUKA, Hidehiro**
    **Tokyo (JP)**
  • **YASHIKI, Tatsurou**
    **Tokyo (JP)**
  • **WATANABE, Ayumi**
    **Tokyo (JP)**
  • **FUJITA, Shinji**
    **Tokyo (JP)**
  • **MIZUKAMI, Takaaki**
    **Tokyo (JP)**
  • **KAWAHARA, Yohei**
    **Tokyo (JP)**
  • **INAGAKI, Ryohei**
    **Tokyo (JP)**
  • **SASAKI, Takashi**
    **Tokyo (JP)**

(74) Representative: **Strehl Schübel-Hopf & Partner
Maximilianstrasse 54
80538 München (DE)**

(54) **GAS SEPARATION SYSTEM**

(57) A gas separation system including: a first separation membrane module including a first gas separation membrane that selectively permeates a specific gas, and having a configuration separated by the first gas separation membrane into a primary side and a secondary side; a second separation membrane module including a second gas separation membrane that selectively permeates the specific gas, and having a configuration separated by the second gas separation membrane into a primary side and a secondary side; a first supply pipe that supplies a mixed gas containing the specific gas to the primary side of the first separation membrane module; a second supply pipe connecting the primary side of the first separation membrane module and the primary side of the second separation membrane module; a first permeable gas pipe connected to the secondary side of the first separation membrane module; a second non-permeable gas pipe connected to the primary side of the second separation membrane module; a second permeable gas pipe that is provided between the secondary side of the second separation membrane module and the first supply pipe, and supplies a gas that has permeated the second gas separation membrane to the first supply pipe; and a second branch pipe connecting the second supply pipe or the second non-permeable gas pipe and the secondary side of the second separation membrane module is used.

*FIG. 1*

**Description**

BACKGROUND OF THE INVENTION

1. Field of the Invention

The present disclosure relates to a gas separation system.

2. Description of the Related Art

As a method of separating a specific gas from a mixed gas containing a plurality of types of gases, there is a method using a separation membrane that selectively permeates a gas. Examples of the separation membrane include a molecular sieve membrane that separates a gas by a difference in molecular diameter represented by a ceramic membrane, and a polymer membrane that utilizes a difference in gas solubility in the membrane. In these separation membranes, a certain amount of gas other than the specific gas to be permeated permeates. Here, a side before permeation through the separation membrane is referred to as "primary side", and a side after permeation is referred to as "secondary side". A gas permeation amount of the separation membrane is obtained by multiplying a difference between a gas partial pressure on the primary side and a gas partial pressure on the secondary side by a gas permeation rate and a membrane area. A polymer material is easily formed into a hollow fiber to increase a membrane area, and a module in which hollow fibers of a polymer membrane are bundled has been commercialized. The gas that has not permeated the secondary side in the module is discharged from the module.

JP 5858992 B2 discloses that a permeate flow and/or a concentrate flow that does not need to be further purified can be supplied by using an apparatus including a chain of three membrane separation steps and having a compressor installed on a supply side of a raw material flow separation step. In this apparatus, it is also disclosed that after the return of a second permeate stream or a third concentrate stream, a raw material flow is composed of a gas of a crude gas stream, a gas of the second permeate stream, and a gas of the third concentrate stream.

SUMMARY OF THE INVENTION

In the apparatus described in JP 5858992 B2, the specific gas that has not permeated through a first module is allowed to permeate a secondary side of a second module and is supplied to the first module again, the gas that has permeated through the first module is allowed to permeate a secondary side of a third module to increase the concentration of the specific gas, and the gas that has not permeated through the third module is also supplied to the first module again to improve a recovery rate.

When a discharge amount of the specific gas that has not permeated discharged from the second module is reduced, the recovery rate can be further improved. In order to reduce the discharge amount of the specific gas, it is conceivable to increase the permeation amount of the specific gas in the first module and the second module. Furthermore, in a case where the specific gas is an impurity in a facility using natural gas or the like, it is desirable to increase the permeation amount of the specific gas to improve the concentration of the non-permeation gas such as natural gas.

An object of the present disclosure is to provide a gas separation system capable of improving a recovery rate of a specific gas and supplying a gas having a reduced concentration of the specific gas to a user who does not need the specific gas.

A gas separation system of the present disclosure includes: a first separation membrane module including a first gas separation membrane that selectively permeates a specific gas, and having a configuration separated by the first gas separation membrane into a primary side and a secondary side; a second separation membrane module including a second gas separation membrane that selectively permeates the specific gas, and having a configuration separated by the second gas separation membrane into a primary side and a secondary side; a first supply pipe that supplies a mixed gas containing the specific gas to the primary side of the first separation membrane module; a second supply pipe connecting the primary side of the first separation membrane module and the primary side of the second separation membrane module; a first permeable gas pipe connected to the secondary side of the first separation membrane module; a second non-permeable gas pipe connected to the primary side of the second separation membrane module; a second permeable gas pipe that is provided between the secondary side of the second separation membrane module and the first supply pipe, and supplies a gas that has permeated the second gas separation membrane to the first supply pipe; and a second branch pipe connecting the second supply pipe or the second non-permeable gas pipe and the secondary side of the second separation membrane module.

According to the present disclosure, it is possible to provide a gas separation system capable of improving a recovery rate of a specific gas and supplying a gas having a reduced concentration of the specific gas to a user who does not need the specific gas.

BRIEF DESCRIPTION OF THE DRAWINGS

Fig. 1 is a schematic configuration diagram illustrating a gas separation system of a first embodiment;
Fig. 2 is a diagram illustrating a result of trial calculation of gas separation performance of a gas separation system of a comparative example;
Fig. 3 is a diagram illustrating a result of trial calculation of gas separation performance of the gas separation system in Fig. 1;
Fig. 4 is a schematic configuration diagram illustrating a gas separation system of a second embodiment;
Fig. 5 is a diagram illustrating a result of trial calculation of gas separation performance of the gas separation system in Fig. 4;
Fig. 6 is a schematic configuration diagram illustrating a gas separation system of a third embodiment;
Fig. 7 is a diagram illustrating a result of trial calculation of gas separation performance of the gas separation system in Fig. 6;
Fig. 8 is a diagram illustrating a result of trial calculation of gas separation performance of a gas separation system according to a modification example of the third embodiment;
Fig. 9 is a schematic configuration diagram illustrating a gas separation system of a fourth embodiment;
Fig. 10 is a graph illustrating a result of trial calculation of a relationship between a first dilution gas flow rate and a recovered gas hydrogen concentration using a hydrogen concentration of a gas supplied from a first supply pipe as a parameter in the gas separation system in Fig. 9; and
Fig. 11 is a schematic configuration diagram illustrating a gas separation system of a fifth embodiment.

DESCRIPTION OF THE PREFERRED EMBODIMENTS

An embodiment of the present disclosure relates to a system in which a specific gas different from natural gas or the like can be separated and used at a place of use by a specific gas user or a system in which natural gas or the like from which the specific gas has been removed can be used in a case where the specific gas is mixed with the natural gas or the like and supplied using an existing pipeline of natural gas or the like, and a system for purifying gas in a gas production facility, a chemical plant, or the like. Examples of the specific gas include hydrogen gas.

Hereinafter, a gas separation system according to an embodiment of the present disclosure will be described with reference to the drawings. Note that, in the following description, a case where a mixed gas contains methane, which is a main component of natural gas, and hydrogen, which is a specific gas, will be described. However, a gas separation system of the present disclosure is not limited to such a composition of the mixed gas, and is desirably applied to all cases where both the specific gas and a remaining gas (In the following embodiments, it is referred to as "non-permeation gas".) remaining on a side of the mixed gas as a result of separating the specific gas are effectively used without being released (discharged) or discarded to the outside of the device. It is desirable that at least the specific gas is effectively used. Here, the effective use can be paraphrased by the term "useful".

Furthermore, other examples of the mixed gas include exhaust gas generated in a power plant, a factory, and the like. The exhaust gas includes nitrogen, oxygen, and the like in addition to carbon dioxide generated by combustion or the like. In this case, at least carbon dioxide is effectively used as the specific gas. Carbon dioxide is useful as a carbon source in organic synthesis.

First embodiment

In the present embodiment, a case where hydrogen is separated and recovered to a secondary side by a hydrogen separation membrane in a mixed gas of hydrogen and methane will be described.

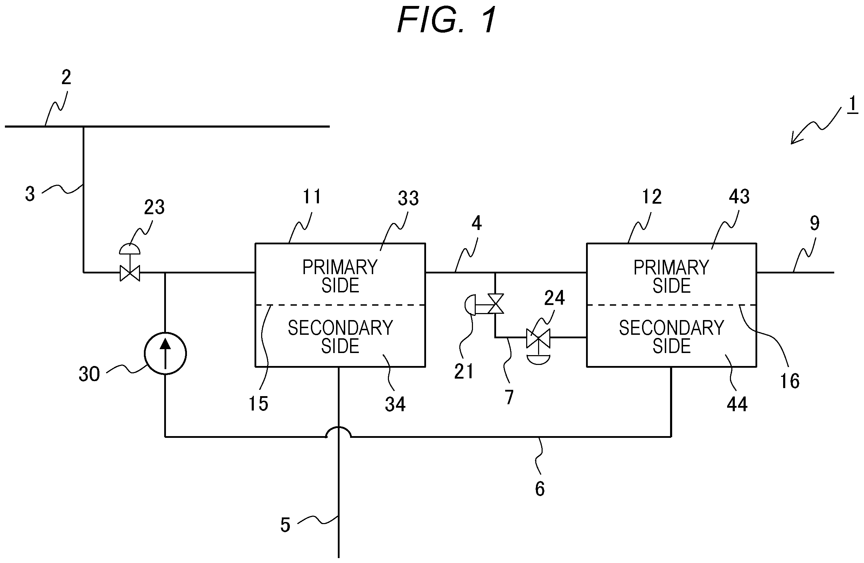

Fig. 1 is a schematic configuration diagram illustrating a gas separation system of the present embodiment.

In this drawing, a hydrogen separation system 1 (gas separation system) is configured to receive the supply of a mixed gas of hydrogen and methane through a first supply pipe 3 branched from a mixed gas main pipe 2. The hydrogen separation system 1 includes a first separation membrane module 11 and a second separation membrane module 12. The first separation membrane module 11 is separated into a primary side 33 and a secondary side 34 by a hydrogen separation membrane 15 (first gas separation membrane). The second separation membrane module 12 is separated into a primary side 43 and a secondary side 44 by a hydrogen separation membrane 16 (second gas separation membrane). The hydrogen separation membranes 15 and 16 selectively permeate the specific gas. The hydrogen separation membranes 15 and 16 are polyimide membranes of polymer membranes. Note that, as the hydrogen separation membranes 15 and 16, ceramic or carbon membranes may be used.

The first supply pipe 3 is connected to the primary side 33 of the first separation membrane module 11. The first supply pipe 3 is provided with a supply gas flow rate adjustment valve 23. A second supply pipe 4 is provided between the primary side 33 of the first separation membrane module 11 and the primary side 43 of the second separation membrane module 12. A second non-permeable gas pipe 9 is connected to the primary side 43 of the second separation membrane module 12.

A first permeable gas pipe 5 is connected to the secondary side 34 of the first separation membrane module 11. A second permeable gas pipe 6 is connected to the secondary side 44 of the second separation membrane module 12. The second permeable gas pipe 6 is connected to the first supply pipe 3. The second permeable gas pipe 6 is provided with a booster 30.

The second supply pipe 4 is provided with a second branch pipe 7 (dilution gas pipe) and connected to the secondary side 44. The second branch pipe 7 is provided with a second dilution gas flow rate adjustment valve 24 and a pressure reducing valve 21. Note that the pressure reducing valve 21 may be omitted by causing the second dilution gas flow rate adjustment valve 24 to also serve as a pressure reducing action. The non-permeation gas flows out from the primary side 33 of the first separation membrane module 11 into the second supply pipe 4. A part of the non-permeation gas flows into the secondary side 44 as a second dilution gas via the second branch pipe 7. The second dilution gas flow rate adjustment valve 24, or the second dilution gas flow rate adjustment valve 24 and the pressure reducing valve 21 are also referred to as "second dilution gas flow rate adjustment unit".

Of the mixed gas supplied from the mixed gas main pipe 2, mainly hydrogen permeates through the hydrogen separation membranes 15 and 16. Methane also permeates through the hydrogen separation membranes 15 and 16, but hydrogen more easily permeates than methane. Therefore, the secondary side 34 has a higher hydrogen concentration than the primary side 33. Similarly, the secondary side 44 has a higher hydrogen concentration than the primary side 43. A permeation amount of each gas in the hydrogen separation membrane 15 is obtained by multiplying a partial pressure difference of each gas between the primary side 33 and the secondary side 34, a permeation rate, and a membrane area of the hydrogen separation membrane 15. Similarly, a permeation amount of each gas in the hydrogen separation membrane 16 is obtained by multiplying a partial pressure difference of each gas between the primary side 43 and the secondary side 44, a permeation rate, and a membrane area of the hydrogen separation membrane 16.

The gas that has permeated through the first separation membrane module 11 is recovered through the first permeable gas pipe 5 connected to the secondary side 34. The mixed gas (non-permeation gas) that has not permeated through the first separation membrane module 11 is supplied to the second separation membrane module 12 through the second supply pipe 4. Since the second supply pipe 4 is branched halfway by the second branch pipe 7, the non-permeation gas of the first separation membrane module 11 is supplied not only to the primary side 43 but also to the secondary side 44 of the second separation membrane module 12.

In the second branch pipe 7, the non-permeation gas of the first separation membrane module 11 is decompressed to a pressure close to the pressure on the secondary side 44 of the second separation membrane module 12 by the pressure reducing valve 21, and a flow rate of the gas supplied to the secondary side 44 is adjusted by the second dilution gas flow rate adjustment valve 24.

In order to increase a hydrogen concentration at the secondary side 34 of the first separation membrane module 11, it is necessary to secure a flow rate of a supply gas to such an extent that the hydrogen concentration at an outlet of the primary side 33 of the first separation membrane module 11 does not significantly decrease. When the supply gas flow rate is small, a methane concentration increases at the outlet on the primary side 33 of the first separation membrane module 11 along with hydrogen permeation, the permeation amount of methane to the secondary side 34 increases, and the hydrogen concentration on the secondary side 34 decreases. When the flow rate of the supply gas is increased in order to keep the hydrogen concentration on the secondary side 34 high, the amount of hydrogen passing through the first separation membrane module 11 as a non-permeation gas is increased, and a recovery rate, which is a ratio of the amount of hydrogen taken out to the secondary side 34 to the amount of supply gas, is decreased.

In order to improve the recovery rate, the second separation membrane module 12 for separating hydrogen in the non-permeation gas that has passed through the first separation membrane module 11 is installed. In the second separation membrane module 12, hydrogen permeates the secondary side 44, and the amount of hydrogen in the non-permeation gas that passes through the second separation membrane module 12 and passes through the second non-permeable gas pipe 9 and is discharged from the hydrogen separation system 1 is greatly reduced. The permeation gas to the secondary side 44 passes through the second permeable gas pipe 6, is pressurized to a pressure higher than or equal to a pressure in the first supply pipe 3 by the booster 30, joins the mixed gas in the first supply pipe 3, and is supplied to the first separation membrane module 11 as a recycled gas. In this way, hydrogen of the gas that has permeated through the second separation membrane module 12 is separated again by the first separation membrane module 11.

At this time, when the amount of hydrogen permeating through the second separation membrane module 12 is increased, the amount of hydrogen discharged from the hydrogen separation system 1 is decreased, so that the recovery rate is further improved. As described above, the hydrogen permeation amount is determined by the partial pressure difference between the hydrogen gas on the primary side and the hydrogen gas on the secondary side.

Therefore, when the hydrogen concentration on the secondary side is lowered, the hydrogen partial pressure on the secondary side is lowered, the partial pressure difference is enlarged, and the hydrogen permeation amount is increased.

In the present embodiment, the second branch pipe 7 is branched from the second supply pipe 4, and supplied as a second dilution gas to the secondary side 44 of the second separation membrane module 12. Since the hydrogen concentration of the gas flowing through the second supply pipe 4 is naturally lower than the hydrogen concentration on the secondary side 44 of the second separation membrane module 12, the gas on the secondary side 44 can be diluted with the second dilution gas to lower the hydrogen concentration. The permeation gas of the second separation membrane module 12 is separated again by the first separation membrane module 11, so that there is no problem even if the hydrogen concentration decreases to some extent. Furthermore, since the decrease in the hydrogen concentration of the permeation gas can be tolerated to some extent, a separation membrane area of the second separation membrane module 12 can be made larger than a separation membrane area of the first separation membrane module 11, and the amount of hydrogen that permeates through the second separation membrane module 12 can be increased to further improve the recovery rate.

Here, a recovery rate (unit: %) of a component A constituting a mixed gas is calculated by the following Formula (1).

$$\text{(Recovery rate of component A)} = \{\text{(outlet flow rate}$$
$$\text{of mixed gas)} \times \text{(outlet concentration of component}$$
$$\text{A)}\}/\{\text{(inlet flow rate of mixed gas)} \times \text{(inlet concentration}$$
$$\text{of component A)}\} \times 100 \bullet\bullet\bullet \text{(1)}$$

The above Formula (1) is applied to both the case where the component A of the mixed gas exemplified in the present embodiment is hydrogen and the case where the component A is methane. Furthermore, the same applies to a case where the mixed gas is composed of other components.

Next, a result of trial calculation of gas separation performance of the gas separation system of the present embodiment will be described.

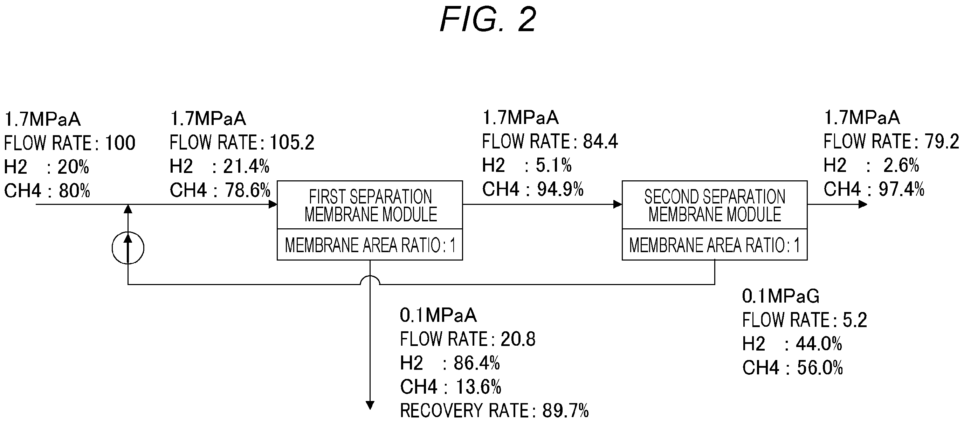

Fig. 2 is a diagram illustrating a result of trial calculation of gas separation performance of a gas separation system of a comparative example. That is, this is the case where dilution from the second branch pipe is not performed.

In this drawing, the flow rate in the first supply pipe is 100, the hydrogen concentration is 200, and the methane concentration is 800. As the hydrogen separation membrane, a polyimide membrane having a permeation rate ratio between hydrogen and methane of about 300 is used. The first separation membrane module and the second separation membrane module have the same separation membrane area. The pressure is 1.7 MPaA on the primary side and 0.1 MPaA on the secondary side. Note that the unit of the concentration of hydrogen or the like exemplified in the present specification is mol%.

In a case where the dilution is not performed as illustrated in this drawing, the amount of the permeate gas in the second separation membrane module to be recycled is 5.2, the flow rate of the recovered gas is 20.8, the hydrogen concentration is 86.4%, and the recovery rate is 89.7%.

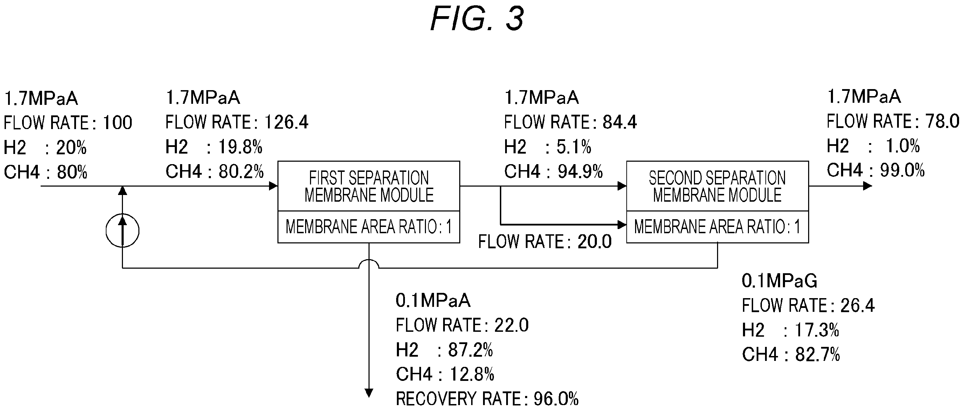

Fig. 3 is a diagram illustrating a result of trial calculation of gas separation performance of the gas separation system in Fig. 1. That is, this is the case where the secondary side of the second separation membrane module is diluted at a flow rate of 20.0. Conditions such as a flow rate, a hydrogen concentration, a methane concentration, a permeation rate ratio of the hydrogen separation membrane, a separation membrane area, and pressures on the primary side and the secondary side in the first supply pipe are the same as those in the case of Fig. 2.

The gas recycled from the second separation membrane module is 26.4 including dilution gas flow rate 20.0. The flow rate of the recovered gas is 22.0 and the hydrogen concentration is 87.2%, and the recovery rate is improved to 96.0%. By supplying the dilution gas to the secondary side of the second separation membrane module, the amount of hydrogen permeating the second separation membrane module is increased, so that the recovery rate is improved.

As compared with Fig. 2, the flow rate and hydrogen concentration of the gas flowing out from the primary side of the second separation membrane module are both low. From this, it can be seen that the amount of hydrogen flowing out of the gas separation system decreases.

Furthermore, hydrogen contained in the non-permeation gas that has not permeated through the second separation membrane module is reduced from 2.6% to 1.0% by dilution as illustrated in Fig. 3, so that the methane concentration of the non-permeation gas can be improved and supplied to a user who needs high concentration methane.

Note that these trial calculation results are for comparing the hydrogen separation performance in the present embodiment, and the flow rate, the pressure condition, the membrane area ratio, and the like are set under conditions necessary for actual operation.

In a case where the second dilution gas is not used, the recovery rate can be improved to the same level as in Fig. 3 by further increasing the separation membrane area of the second separation membrane module 12. However, by using the present exemplary embodiment, the second separation membrane module 12 can be reduced, and the hydrogen separation system 1 can be downsized to reduce the cost.

Note that, from the viewpoint of supplying high concentration methane, in other words, from the viewpoint of reducing the hydrogen concentration in the gas flowing out from the primary side of the second separation membrane module 12, the hydrogen separation characteristics of the separation membrane of the second separation membrane module 12 are desirably higher than those of the separation membrane of the first separation membrane module 11.

Second embodiment

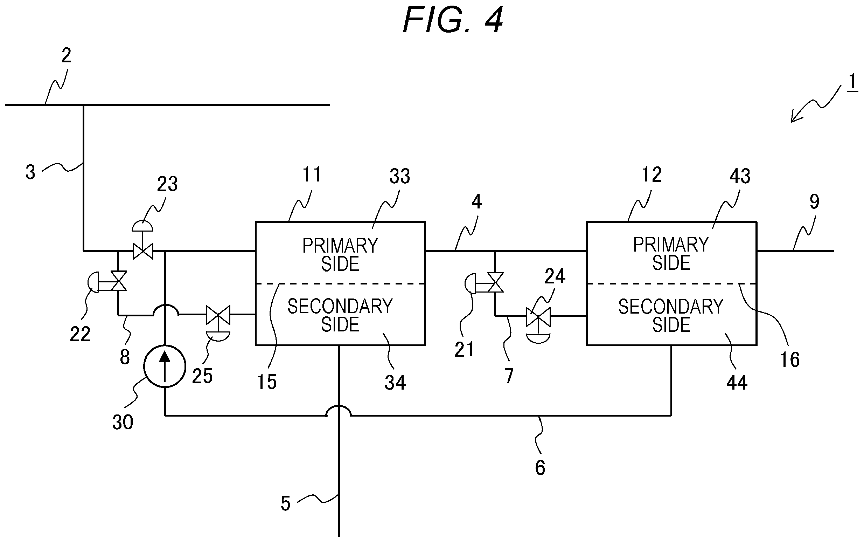

Fig. 4 is a schematic configuration diagram illustrating a gas separation system according to a second embodiment.

The present embodiment is different from the first embodiment in that a first branch pipe 8 branched from a first supply pipe 3 is connected to a secondary side 34 of a first separation membrane module 11.

By supplying a part of the supply gas as a dilution gas to the secondary side 34 of the first separation membrane module 11 through the first branch pipe 8, the hydrogen concentration on the secondary side 34 decreases, and the hydrogen partial pressure difference between a primary side 33 and the secondary side 34 increases. Therefore, the amount of hydrogen permeating through the first separation membrane module 11 increases. Since the gas that has permeated through the secondary side 34 is diluted, the hydrogen concentration decreases, but in a case where a user does not necessarily use high concentration hydrogen, the configuration of the present embodiment can be applied. Since the same hydrogen permeation amount can be obtained with a smaller separation membrane area, the first separation membrane module 11 can be reduced while maintaining the recovery rate, and the hydrogen separation system can be downsized to reduce the cost.

Note that it is desirable that the first branch pipe 8 be provided with a first dilution gas flow rate adjustment valve 25 and a pressure reducing valve 22 similarly to a second branch pipe 7. The first dilution gas flow rate adjustment valve 25 or the first dilution gas flow rate adjustment valve 25 and the pressure reducing valve 22 are also referred to as "first dilution gas flow rate adjustment unit".

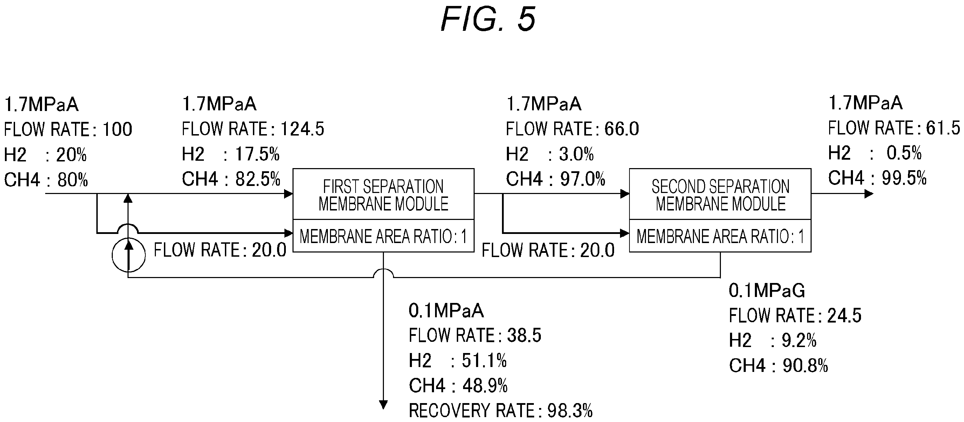

Fig. 5 is a diagram illustrating a result of trial calculation of gas separation performance of the gas separation system in Fig. 4.

In Fig. 5, the conditions are the same as those in Fig. 3 except that dilution on the secondary side of the first separation membrane module is added at a flow rate of 20.0.

Compared with Fig. 3, the flow rate of the recovered gas is 38.5 including the dilution gas flow rate 20.0, and the hydrogen concentration is reduced to 51.1% by dilution, but the recovery rate is improved to 98.3%. The flow rate and hydrogen concentration of the gas flowing out from the primary side of the second separation membrane module are both low. From this, it can be seen that the amount of hydrogen flowing out of the gas separation system decreases.

Furthermore, hydrogen contained in the gas (non-permeation gas) flowing out from the primary side of the second separation membrane module can be further reduced from 1.0% in the first embodiment to 0.5%, and the methane concentration of the non-permeation gas can be improved and supplied to a user who needs high concentration methane.

Third embodiment

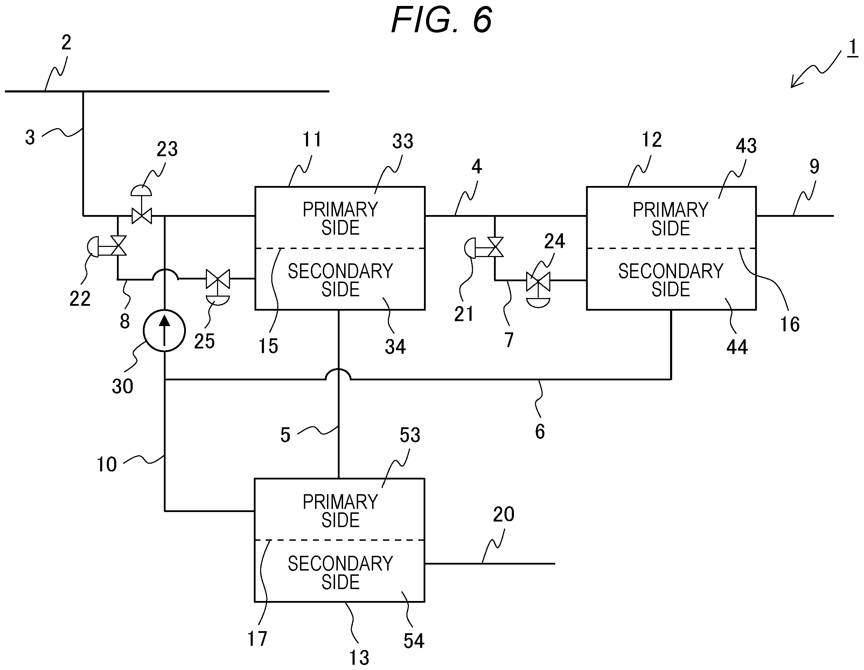

Fig. 6 is a schematic configuration diagram illustrating a gas separation system according to a third embodiment.

In this drawing, a third separation membrane module 13 is added to the configuration of the second exemplary embodiment (Fig. 4) in order to greatly improve the hydrogen concentration of the recovered gas. A first permeable gas pipe 5 of a first separation membrane module 11 is connected to a primary side 53 of the third separation membrane module 13. The third separation membrane module 13 includes a hydrogen separation membrane 17 (third gas separation membrane) that separates the primary side 53 and a secondary side 54, and a non-permeation gas of the third separation membrane module 13 is configured to flow back to a first supply pipe 3 through a third supply pipe 10. The third supply pipe 10 is connected to join a second permeable gas pipe 6 on an upstream side of a booster 30. The hydrogen separation membrane 17 selectively permeates the specific gas.

As in Fig. 4, by diluting the permeation gas on the secondary side 34 of the first separation membrane module 11 through the first branch pipe 8, the hydrogen permeation amount can be increased, but the hydrogen concentration decreases.

In a hydrogen separation system 1 illustrated in Fig. 6, hydrogen contained in the permeation gas of the first separation membrane module 11 can be separated by the third separation membrane module 13 to obtain high concentration hydrogen.

The separated gas is recovered from the secondary side 54 of the third separation membrane module 13 through a third permeable gas pipe 20. The non-permeation gas of the third separation membrane module 13 contains a large amount of hydrogen. Therefore, the non-permeation gas of the third separation membrane module 13 is returned to the first supply pipe 3 as a recycled gas through the third supply pipe 10, and hydrogen is separated again by the first separation membrane module 11. The third supply pipe 10 joins the second permeable gas pipe 6 on the upstream side of the booster 30, so that the gas in the second permeable gas pipe 6 and the third supply pipe 10 can be boosted by one booster 30.

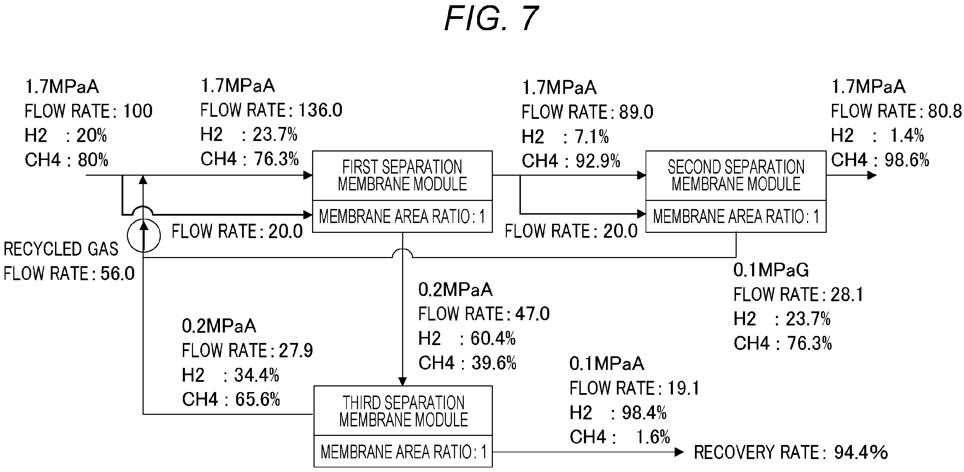

Fig. 7 is a diagram illustrating a result of trial calculation of gas separation performance of the gas separation system in Fig. 6.

In Fig. 7, since a differential pressure is required between the primary side and the secondary side of the third separation membrane module, the secondary side of the first separation membrane module was set to 0.2 MPaA. A separation membrane area of the third separation membrane module is the same as that of the other modules. Other conditions are the same as those in Fig. 5.

As compared with Fig. 5, the flow rate of the recovered gas is 19.1, and the hydrogen concentration is improved to 98.4% by the separation in the third separation membrane module. On the other hand, the recovery rate has decreased to 94.4%. This is because since the amount of recycled gas increased, the flow rate of the gas flowing out from the second non-permeable gas pipe connected to the primary side of the second separation membrane module increased, and the hydrogen concentration of the gas supplied to the primary side of the first separation membrane module increased by the recycled gas, so that the hydrogen concentration of the gas flowing out from the second non-permeable gas pipe also increased.

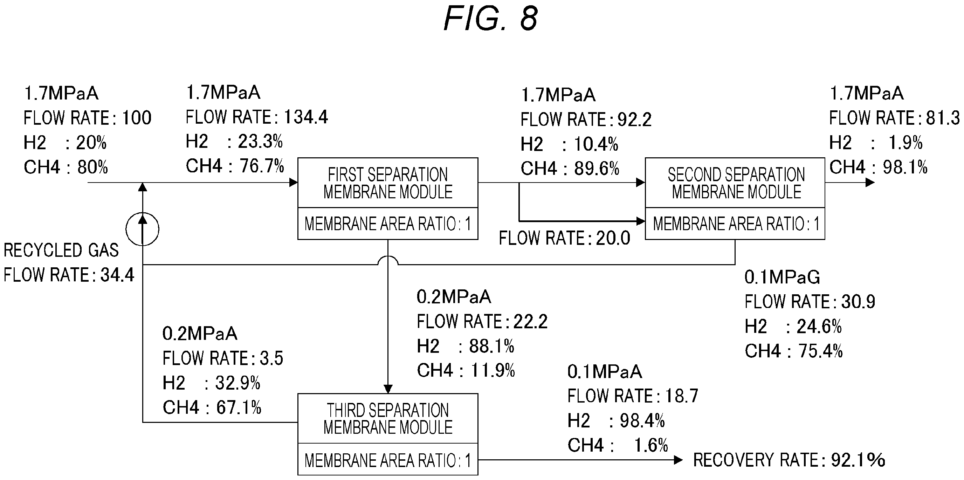

Fig. 8 is a diagram illustrating a result of trial calculation of gas separation performance of a gas separation system according to a modification example of the third embodiment.

The present drawing is different from Fig. 7 in that a first branch pipe that branches from a first supply pipe for supplying a mixed gas and is connected to a secondary side of a first separation membrane module is not provided.

In Fig. 8, the flow rate of the recovered gas is 18.7, and the recovery rate is 92.1%. Although these values are lower than those in the configuration of Fig. 7, it is found that the hydrogen concentration can be maintained at 98.4%. Therefore, it can be said that the modification example illustrated in Fig. 8 can obtain the same hydrogen concentration with a simpler system than that illustrated in Fig. 7.

Fourth embodiment

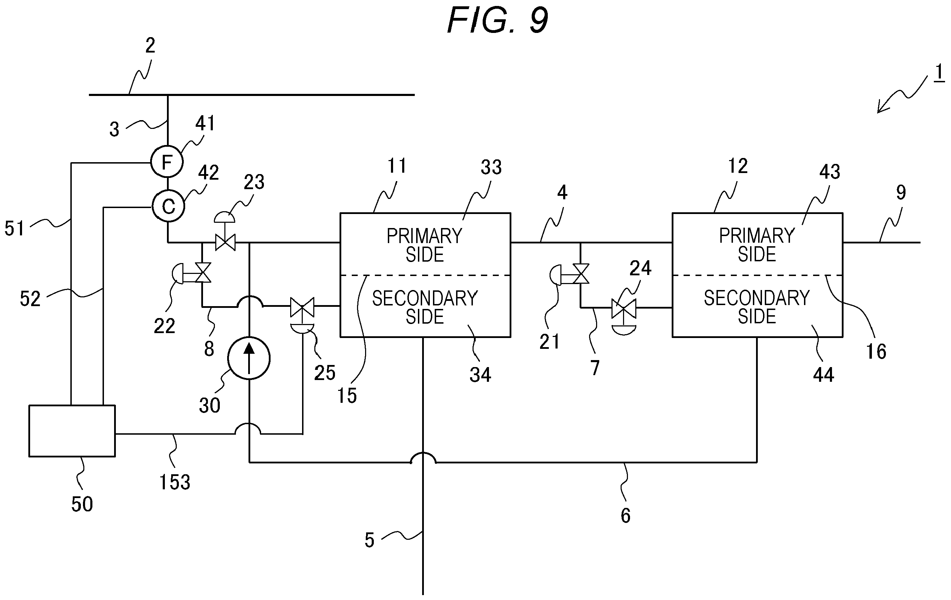

Fig. 9 is a schematic configuration diagram illustrating a gas separation system according to a fourth embodiment.

The present drawing is different from Fig. 4 of the second embodiment in that a signal processing device 50 (control device) for controlling an opening degree of a first dilution gas flow rate adjustment valve 25 of a first branch pipe 8 is provided.

The control device includes a computer including a storage device such as a central processing unit (CPU), a read only memory (ROM), a random access memory (RAM), and a hard disk drive (HDD), and a display. Then, the CPU executes a program stored in the HDD to perform calculation processing and generate a control signal.

In Fig. 9, a flow meter 41 (flow rate sensor) for measuring a flow rate of the supply gas and a concentration meter 42 (concentration sensor) for measuring a hydrogen concentration are installed in a first supply pipe 3. A signal of the flow meter 41 is sent to the signal processing device 50 through a flow meter signal cable 51, and a signal of the concentration meter 42 is sent to the signal processing device 50 through a hydrogen concentration meter signal cable 52. The signal processing device 50 performs calculation for making the opening degree of the first dilution gas flow rate adjustment valve 25 of the first branch pipe 8 appropriate on the basis of these signals, and sends a control signal to the first dilution gas flow rate adjustment valve 25 through a flow rate adjustment valve control signal cable 153.

In a case where hydrogen produced by renewable energy such as solar power generation is mixed into a mixed gas main pipe 2, the hydrogen concentration may vary with time. When the hydrogen concentration in the mixed gas main pipe 2 varies, the hydrogen concentration of the gas recovered through a hydrogen separation system 1 varies. In a case where the recovered gas is directly used without being stored, it is necessary to maintain the hydrogen concentration at a certain level or more depending on equipment. Therefore, it is desirable to control the hydrogen concentration of the recovered gas to be constant.

In the present embodiment, the flow rate (first dilution gas flow rate) of the first dilution gas flowing through the first branch pipe 8 is adjusted by controlling the opening degree of the first dilution gas flow rate adjustment valve 25, whereby the hydrogen concentration (recovered gas hydrogen concentration) of the recovered gas flowing out from a first permeable gas pipe 5 is controlled to be constant. When the first dilution gas flow rate is large, the hydrogen concentration of the recovered gas decreases, and when the first dilution gas flow rate is small, the hydrogen concentration of the recovered gas increases. Therefore, the first dilution gas flow rate is controlled based on the hydrogen concentration of the mixed gas flowing through the first supply pipe 3.

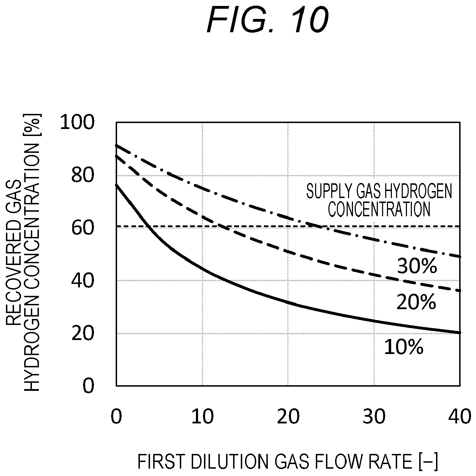

Fig. 10 is a graph illustrating a result of trial calculation of a relationship between the first dilution gas flow rate and the recovered gas hydrogen concentration using the hydrogen concentration of the gas supplied from the first supply pipe as a parameter in the gas separation system of Fig. 9. The horizontal axis represents the first dilution gas flow rate, and the vertical axis represents the recovered gas hydrogen concentration.

In Fig. 10, a case where the hydrogen concentration (supply gas hydrogen concentration) of the gas supplied from the first supply pipe is 10% is indicated by a solid line, a case where the hydrogen concentration is 20% is indicated by a broken line, and a case where the hydrogen concentration is 30% is indicated by a one-dot chain line. Conditions other than the first dilution gas flow rate are the same as those in Fig. 5.

When the first dilution gas flow rate increases, the recovered gas hydrogen concentration decreases. Furthermore, the higher the supply gas hydrogen concentration, the higher the recovered gas hydrogen concentration.

For example, as illustrated in Fig. 10, in a case where the supply gas hydrogen concentration is 100, when the first dilution gas flow rate is set to about 4, the recovered gas hydrogen concentration can be set to 600. In a case where the supply gas hydrogen concentration increases to 200, when the first dilution gas flow rate is set to about 11, the recovered gas hydrogen concentration can be set to 600. Moreover, in a case where the supply gas hydrogen concentration increases to 300, the recovered gas hydrogen concentration can be maintained at 60% by setting the first dilution gas flow rate to about 21. In this manner, the recovered gas hydrogen concentration can be controlled by adjusting the first dilution gas flow rate.

In summary, in order to maintain the recovered gas hydrogen concentration at a constant value or within a predetermined range, it is only required to perform control to decrease the first dilution gas flow rate, that is, control to decrease the opening degree of the first dilution gas flow rate adjustment valve 25 of Fig. 9, in accordance with the decrease in the supply gas hydrogen concentration, and perform control to increase the first dilution gas flow rate, that is, control to increase the opening degree of the first dilution gas flow rate adjustment valve 25 of Fig. 9, in accordance with the increase in the supply gas hydrogen concentration.

In Fig. 9, the control for maintaining the recovered gas hydrogen concentration at a constant value is performed by adjusting the flow rate of the first dilution gas flowing into the secondary side 34 of the first separation membrane module 11, but the present disclosure is not limited thereto, and the control for maintaining the recovered gas hydrogen concentration at a constant value or within a predetermined range may be performed by adjusting the flow rate of the second dilution gas flowing into the secondary side 44 of the second separation membrane module 12.

In the above embodiment, the configuration in which the pipe of the gas supplied to the primary side is branched and supplied to the secondary side has been described, but the pipe of the gas flowing out from the primary side may be branched and introduced to the secondary side. This configuration will be described next.

Fifth embodiment

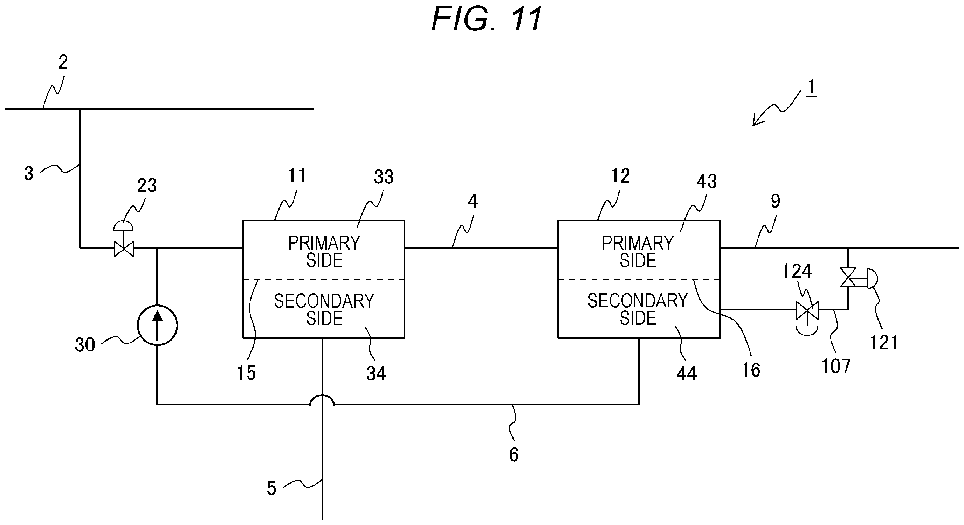

Fig. 11 is a schematic configuration diagram illustrating a gas separation system according to a fifth embodiment.

The present drawing is different from Fig. 1 of the first embodiment in that a second non-permeation gas branch pipe 107 is provided instead of the second branch pipe 7 of Fig. 1. That is, a second non-permeable gas pipe 9, which is a pipe for gas flowing out from a primary side 43 of a second separation membrane module 12, is branched and introduced into a secondary side 44. The second non-permeation gas branch pipe 107 is provided with a pressure reducing valve 121 and a second dilution gas flow rate adjustment valve 124.

Also in the present embodiment, as in the first embodiment, by supplying a dilution gas to the secondary side 44 of the second separation membrane module 12, the amount of hydrogen permeating through the second separation membrane module 12 can be increased, and the recovery rate can be increased.

Hereinafter, desirable embodiments according to the present disclosure will be collectively described.

In the gas separation system, the booster is provided on a downstream side of the junction of the first supply pipe and the second permeable gas pipe, or in the second permeable gas pipe.

The second dilution gas flow rate adjustment valve is provided in the second branch pipe.

The specific gas is supplied to a user through the first permeable gas pipe.

A gas excluding the specific gas is supplied to the user through the second non-permeable gas pipe.

The first branch pipe connecting the first supply pipe and the secondary side of the first separation membrane module is further provided.

The first dilution gas flow rate adjustment valve is provided in the first branch pipe.

The second dilution gas flow rate adjustment valve includes the pressure reducing valve.

The first dilution gas flow rate adjustment valve includes the pressure reducing valve.

The gas separation system further includes: the third separation membrane module including the third gas separation membrane that selectively permeates a specific gas, and having a configuration separated by the third gas separation membrane into the primary side and the secondary side; the third permeable gas pipe connected to the secondary side of the third separation membrane module; and the third supply pipe provided between the primary side of the third separation membrane module and the second permeable gas pipe or the first supply pipe, in which the first permeable gas pipe is connected to the primary side of the third separation membrane module.

The booster is provided on a downstream side of the junction of the first supply pipe and the second permeable gas pipe, or on a downstream side of the junction of the second permeable gas pipe and the third supply pipe.

The gas separation system further includes the flow rate sensor that measures a flow rate of the gas flowing through the first supply pipe, the concentration sensor that measures a concentration of the specific gas flowing through the first supply pipe, and the control device that receives signals of the flow rate sensor and the concentration sensor and adjusts an opening degree of the first dilution gas flow rate adjustment valve based on the signals.

The control device adjusts the opening degree of the first dilution gas flow rate adjustment valve so as to maintain the concentration of the specific gas supplied from the first permeable gas pipe to a user within a predetermined range.

Finally, effects of the gas separation system according to the present disclosure will be described.

According to the present disclosure, since the permeation amount of the specific gas in the first separation membrane module and the second separation membrane module increases, the recovery rate of the specific gas can be improved. Furthermore, when the permeation amount of the specific gas is the same, the membrane area may be small, and the module can be downsized, so that the cost of the separation system can be reduced. By improving the recovery rate of the specific gas, the specific gas concentration in the non-permeation gas can be reduced, and the non-permeation gas having a low concentration of the specific gas can be supplied to the user of the non-permeation gas.

**Claims**

1. A gas separation system comprising:

   a first separation membrane module including a first gas separation membrane that selectively permeates a specific gas, and having a configuration separated by the first gas separation membrane into a primary side and a secondary side;
   a second separation membrane module including a second gas separation membrane that selectively permeates the specific gas, and having a configuration separated by the second gas separation membrane into a primary side and a secondary side;
   a first supply pipe that supplies a mixed gas containing the specific gas to the primary side of the first separation membrane module;
   a second supply pipe connecting the primary side of the first separation membrane module and the primary side of the second separation membrane module;
   a first permeable gas pipe connected to the secondary side of the first separation membrane module;
   a second non-permeable gas pipe connected to the primary side of the second separation membrane module;
   a second permeable gas pipe that is provided between the secondary side of the second separation membrane module and the first supply pipe, and supplies a gas that has permeated the second gas separation membrane to the first supply pipe; and
   a second branch pipe connecting the second supply pipe or the second non-permeable gas pipe and the secondary side of the second separation membrane module.

2. The gas separation system according to claim 1, wherein a booster is provided on a downstream side of a junction of the first supply pipe and the second permeable gas pipe, or on the second permeable gas pipe.

3. The gas separation system according to claim 1, wherein the second branch pipe is provided with a second dilution gas flow rate adjustment valve.

4. The gas separation system according to claim 1, wherein the specific gas is supplied to a user via the first permeable gas pipe.

5. The gas separation system according to claim 1, wherein a gas excluding the specific gas is supplied to a user via the second non-permeable gas pipe.

6. The gas separation system according to claim 1, further comprising a first branch pipe connecting the first supply pipe and the secondary side of the first separation membrane module.

7. The gas separation system according to claim 6, wherein the first branch pipe is provided with a first dilution gas flow rate adjustment valve.

8. The gas separation system according to claim 3, wherein the second dilution gas flow rate adjustment valve includes a pressure reducing valve.

9. The gas separation system according to claim 7, wherein the first dilution gas flow rate adjustment valve includes a pressure reducing valve.

10. The gas separation system according to claim 1, further comprising:

   a third separation membrane module including a third gas separation membrane that selectively permeates the specific gas, and having a configuration separated by the third gas separation membrane into a primary side and a secondary side;
   a third permeable gas pipe connected to the secondary side of the third separation membrane module; and
   a third supply pipe provided between the primary side of the third separation membrane module and the second permeable gas pipe or the first supply pipe, wherein
   the first permeable gas pipe is connected to the primary side of the third separation membrane module.

11. The gas separation system according to claim 10, wherein a booster is provided on a downstream side of a junction of the first supply pipe and the second permeable gas pipe, or on a downstream side of a junction of the second permeable gas pipe and the third supply pipe.

12. The gas separation system according to claim 7, further comprising:

   a flow rate sensor that measures a flow rate of gas flowing through the first supply pipe;
   a concentration sensor that measures a concentration of the specific gas flowing through the first supply pipe; and
   a control device that receives signals of the flow rate sensor and the concentration sensor, and adjusts an opening degree of the first dilution gas flow rate adjustment valve based on the signals.

13. The gas separation system according to claim 12, wherein the control device adjusts the opening degree of the first dilution gas flow rate adjustment valve so as to maintain the concentration of the specific gas supplied from the first permeable gas pipe to a user within a predetermined range.

*FIG. 1*

EP 4 368 276 A1

EP 4 368 276 A1

## FIG. 2

1.7MPaA
FLOW RATE : 100
H2   : 20%
CH4 : 80%

1.7MPaA
FLOW RATE : 105.2
H2   : 21.4%
CH4 : 78.6%

| FIRST SEPARATION MEMBRANE MODULE |
| MEMBRANE AREA RATIO : 1 |

1.7MPaA
FLOW RATE : 84.4
H2   : 5.1%
CH4 : 94.9%

| SECOND SEPARATION MEMBRANE MODULE |
| MEMBRANE AREA RATIO : 1 |

1.7MPaA
FLOW RATE : 79.2
H2   : 2.6%
CH4 : 97.4%

0.1MPaA
FLOW RATE : 20.8
H2   : 86.4%
CH4 : 13.6%
RECOVERY RATE : 89.7%

0.1MPaG
FLOW RATE : 5.2
H2   : 44.0%
CH4 : 56.0%

## FIG. 3

1.7MPaA
FLOW RATE : 100
H2 : 20%
CH4 : 80%

1.7MPaA
FLOW RATE : 126.4
H2 : 19.8%
CH4 : 80.2%

1.7MPaA
FLOW RATE : 84.4
H2 : 5.1%
CH4 : 94.9%

1.7MPaA
FLOW RATE : 78.0
H2 : 1.0%
CH4 : 99.0%

| FIRST SEPARATION MEMBRANE MODULE |
| MEMBRANE AREA RATIO : 1 |

FLOW RATE : 20.0

| SECOND SEPARATION MEMBRANE MODULE |
| MEMBRANE AREA RATIO : 1 |

0.1MPaA
FLOW RATE : 22.0
H2 : 87.2%
CH4 : 12.8%
RECOVERY RATE : 96.0%

0.1MPaG
FLOW RATE : 26.4
H2 : 17.3%
CH4 : 82.7%

EP 4 368 276 A1

*FIG. 4*

EP 4 368 276 A1

## FIG. 5

1.7MPaA
FLOW RATE : 100
H2 : 20%
CH4 : 80%

1.7MPaA
FLOW RATE : 124.5
H2 : 17.5%
CH4 : 82.5%

1.7MPaA
FLOW RATE : 66.0
H2 : 3.0%
CH4 : 97.0%

1.7MPaA
FLOW RATE : 61.5
H2 : 0.5%
CH4 : 99.5%

FIRST SEPARATION
MEMBRANE MODULE

MEMBRANE AREA RATIO : 1

SECOND SEPARATION
MEMBRANE MODULE

MEMBRANE AREA RATIO : 1

FLOW RATE : 20.0

FLOW RATE : 20.0

0.1MPaA
FLOW RATE : 38.5
H2 : 51.1%
CH4 : 48.9%
RECOVERY RATE : 98.3%

0.1MPaG
FLOW RATE : 24.5
H2 : 9.2%
CH4 : 90.8%

EP 4 368 276 A1

FIG. 6

# FIG. 7

1.7MPaA
FLOW RATE : 100
H2　: 20%
CH4 : 80%

1.7MPaA
FLOW RATE : 136.0
H2　: 23.7%
CH4 : 76.3%

1.7MPaA
FLOW RATE : 89.0
H2　: 7.1%
CH4 : 92.9%

1.7MPaA
FLOW RATE : 80.8
H2　: 1.4%
CH4 : 98.6%

RECYCLED GAS
FLOW RATE : 56.0

FLOW RATE : 20.0

FIRST SEPARATION
MEMBRANE MODULE

MEMBRANE AREA RATIO : 1

FLOW RATE : 20.0

SECOND SEPARATION
MEMBRANE MODULE

MEMBRANE AREA RATIO : 1

0.1MPaG
FLOW RATE : 28.1
H2　: 23.7%
CH4 : 76.3%

0.2MPaA
FLOW RATE : 27.9
H2　: 34.4%
CH4 : 65.6%

0.2MPaA
FLOW RATE : 47.0
H2　: 60.4%
CH4 : 39.6%

0.1MPaA
FLOW RATE : 19.1
H2　: 98.4%
CH4 : 1.6%

THIRD SEPARATION
MEMBRANE MODULE

MEMBRANE AREA RATIO : 1

RECOVERY RATE : 94.4%

*FIG. 8*

1.7MPaA
FLOW RATE: 100
H2  : 20%
CH4 : 80%

1.7MPaA
FLOW RATE: 134.4
H2  : 23.3%
CH4 : 76.7%

1.7MPaA
FLOW RATE: 92.2
H2  : 10.4%
CH4 : 89.6%

1.7MPaA
FLOW RATE: 81.3
H2  : 1.9%
CH4 : 98.1%

FIRST SEPARATION
MEMBRANE MODULE

MEMBRANE AREA RATIO : 1

SECOND SEPARATION
MEMBRANE MODULE

MEMBRANE AREA RATIO : 1

RECYCLED GAS
FLOW RATE: 34.4

FLOW RATE: 20.0

0.2MPaA
FLOW RATE: 22.2
H2  : 88.1%
CH4 : 11.9%

0.1MPaG
FLOW RATE: 30.9
H2  : 24.6%
CH4 : 75.4%

0.2MPaA
FLOW RATE: 3.5
H2  : 32.9%
CH4 : 67.1%

0.1MPaA
FLOW RATE: 18.7
H2  : 98.4%
CH4 :  1.6%

THIRD SEPARATION
MEMBRANE MODULE

MEMBRANE AREA RATIO : 1

RECOVERY RATE: 92.1%

EP 4 368 276 A1

FIG. 9

# FIG. 10

*FIG. 11*

EP 4 368 276 A1

Europäisches
Patentamt

European
Patent Office

Office européen
des brevets

# EUROPEAN SEARCH REPORT

Application Number

**EP 23 19 9904**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/046922 A1 (JENSVOLD JOHN A [US] ET AL) 14 February 2019 (2019-02-14) | 1,2,5-7, 10-13 | INV.<br>B01D53/22 |
| Y | * figure 1 * | 12,13 | |
| X | WO 2020/079403 A1 (MEMBRANE TECH AND RESEARCH INC [US]; WESTON DANIEL [GB]) 23 April 2020 (2020-04-23) | 1-4,8,9, 12,13 | |
| Y | * figure 6 * | 12,13 | |
| Y | US 2020/239797 A1 (OKADA OSAMU [JP] ET AL) 30 July 2020 (2020-07-30) * paragraph [0093] * | 12,13 | |

TECHNICAL FIELDS
SEARCHED       (IPC)

B01D

The present search report has been drawn up for all claims

| Place of search | Date of completion of the search | Examiner |
|---|---|---|
| Munich | 28 March 2024 | Pasanisi, Andrea |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 9904

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2024

| Patent document cited in search report | | Publication date | Patent family member(s) | | Publication date |
|---|---|---|---|---|---|
| US 2019046922 | A1 | 14-02-2019 | EP | 3446771 A1 | 27-02-2019 |
| | | | US | 2019046922 A1 | 14-02-2019 |
| WO 2020079403 | A1 | 23-04-2020 | NONE | | |
| US 2020239797 | A1 | 30-07-2020 | CN | 111094725 A | 01-05-2020 |
| | | | EP | 3680470 A1 | 15-07-2020 |
| | | | JP | 6742656 B2 | 19-08-2020 |
| | | | JP WO2019049629 A1 | 06-08-2020 |
| | | | US | 2020239797 A1 | 30-07-2020 |
| | | | WO | 2019049629 A1 | 14-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5858992 B